# EUROPÄISCHE PATENTANMELDUNG

(11) **EP 0 599 143 A2**
(43) Veröffentlichungstag der Anmeldung: **01.06.1994**
(21) Anmeldenummer: 93118269.5
(22) Anmeldetag: 11.11.1993
(51) Int. Cl.: G01S 13/82, G01S 13/02, G01S 7/02

(54) **Hochfrequenz-Kommunikationseinrichtung**

(30) Priorität: 20.11.1992 DE 4239065
(71) Anmelder: DIEHL GMBH & CO., D-90478 Nürnberg (DE)
(72) Erfinder: Werner, Wolfgang, Dipl.-Ing., D-90461 Nürnberg (DE); Plasberg, Georg, Dr., D-90562 Kalchreuth (DE)

(57) **Zusammenfassung**

Eine Hochfrequenz-Kommunikationseinrichtung (11), bei der in einem codierten Antwortgerät (13) eine Modifikation des empfangenen und wieder abzustrahlenden Abfragesignales (14) erfolgt, soll für gesteigerte Zuverlässigkeit seiner Arbeitsweise unabhängig von der relativen räumlichen Zuordnung zwischen Abfragegerät (12) und Antwortgeräten (13) ausgelegt werden. Dafür ist vorzugsweise die Abfrageantennen (20) zirkular, dagegen die preiswerter zu erstellende Antwortantenne (19) linear polarisiert. Ein entfernungsabhängiges Ausblenden des Antwortsignales (15) im Abfragegerät (12) wird vermieden, wenn in seinem Empfänger (22) zusätzlich zum Sende-Empfangs-Mischer ein Quadraturmischer für ein um 90°-phasenverschobenes Empfangssignal vorgesehen ist. Eine gemischte Phasen- und Amplitudenmodulation, wie sie durch Einsatz eines Varaktors (30) im Antennenkreis vor der Antwortantenne (19) erzielbar ist, ist störunanfälliger als eine reine Amplitudenmodulation mit Bedämpfung oder Austastung dieses Antennenkreises.

## Beschreibung

Die Erfindung betrifft eine Kommunikationseinrichtung gemäß dem Oberbegriff des Anspruches 1.

Eine derartige Kommunikationseinrichtung ist aus der DE-PS 40 23 890 und aus der diese ergänzenden DE-OS 41 02 816 bekannt.

Diese Kommunikationseinrichtung hat sich als Berechtigungssystem und als Fernwirksystem bereits grundsätzlich bewährt. Der Erfindung liegt die Aufgabe zugrunde, die Funktionszuverlässigkeit einer solchen Einrichtung ohne wesentliche Steigerung des apparativen Aufwandes noch spürbar zu steigern.

Diese Aufgabe ist erfindungsgemäß im wesentlichen dadurch gelöst, daß die gattungsgemäße Kommunikationseinrichtung nach dem Kennzeichnungsteil des Patentanspruches 1 ausgelegt ist.

Nach dieser Lösung ist die Übermittlung des Abfragesignales und dessen Wieder-Aufnahme nach Modifikation im Antwortgerät praktisch lageunabhängig, so daß beispielsweise beim aufeinanderfolgenden Erfassen einer Serie von Gegenständen, die die Antwortgeräte tragen, keine feste Orientierung bezüglich der Installation des Abfragegerätes eingehalten werden muß, indem vorzugsweise dieses mit einer zirkularpolarisierten, dagegen jedes der Antwortgeräte mit einer billiger realisierbaren linear polarisierten Antenne ausgestattet werden.

Die Kosinusabhängigkeit der Amplitude des Antwortsignales und der daraus resultierende Empfangsausfall bei in Abhängigkeit von der Trägerfrequenz des Abfragesignales periodisch auftretenden Abfrage- und Antwortentfernungen läßt sich dadurch eliminieren, daß empfangsseitig das Mischsignal aus Sende- und Empfangssignal überlagert wird von einem Quadratur-Mischsignal. Dadurch hat eines der beiden Mischer-Ausgangssignale stets maximale Amplitude, wenn das andere Signal zum Polaritätswechsel den Nulldurchgang erfährt, so daß im Ergebnis eine entfernungsabhängige Signalausblendung nicht mehr vorkommen kann.

Eine reine Amplitudenmodulation, einschließlich einer Amplitudenaustastung, beim Umsetzen des vom Antwortgerät aufgenommenen Abfragesignales in das wieder abzustrahlende Antwortsignal ist grundsätzlich relativ störanfällig. Weniger störanfällig ist eine Frequenzmodulation oder jedenfalls eine gemischte Amplituden- und Phasenmodulation, wie sie leicht mit einem Varaktor im Antwortgerät realisierbar ist.

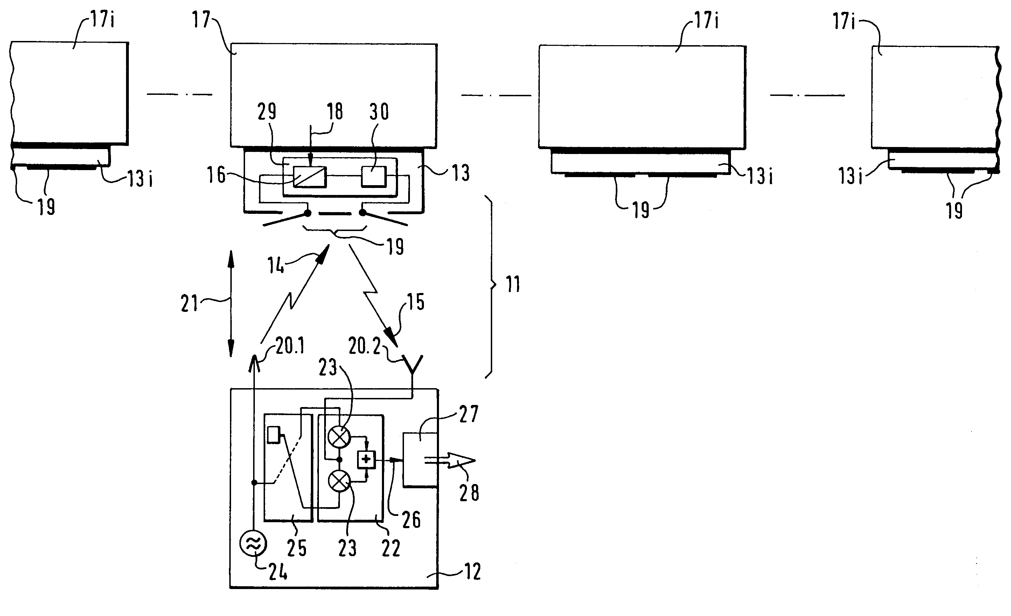

Zusätzliche Alternativen und Weiterbildungen sowie weitere Merkmale und Vorteile der Erfindung erbeben sich aus den weiteren Ansprüchen, und, auch unter Berücksichtigung der Darlegungen in der Zusammenfassung, aus nachstehender Beschreibung eines in der Zeichnung unter Beschränkung auf das Wesentliche stark abstrahiert skizzierten bevorzugten Realisierungsbeispiels zur erfindungsgemäßen Lösung. Die einzige Figur der Zeichnung zeigt nach Art von Blockschaltbildern mehrere Träger von Antwortgeräten, die von einem Abfragegerät identifiziert und hinsichtlich etwa eingeprägter Informationen ausgelesen werden.

Die dargestellte Kommunikationseinrichtung 11 dient der drahtlosen Fernwirkung zwischen einem Abfragegerät 12 und einem Antwortgerät 13 in dem Sinne, daß das Abfragegerät 12 mit einem Abfragesignal 14 das Antwortgerät 13 anspricht und das dadurch dort ausgelöste Antwortsignal 15 wieder empfängt und auswertet.

Das Antwortsignal 15 enthält eine Identitätsinformation 16 zur Kennzeichnung des Trägers 17 und gegebenenfalls zusätzlich eine Statusinformation 18 über bestimmte im Träger 17 gerade feststellbare Parameter, mit denen das von der Antwortantenne 19 aufgenommene Abfragesignal 14 moduliert und dann als Antwortsignal 15 wieder abgestrahlt wird (wie in den eingangs zitierten älteren Patentanmeldungen zur gattungsgemäßen Kommunikationseinrichtung für verschiedene Anwendungsfälle näher beschrieben). Grundsätzlich kann das Abfragegerät 12 mit einer gemeinsamen Antenne 20 an einer Sende-Empfangs-Weiche betrieben werden. Zur Vereinfachung der schaltungstechnischen Erläuterung ist in der Beispiels-Zeichnung jedoch eine Abfrage-Sendeantenne 20.1 getrennt von einer Abfrage-Empfangsantenne 20.2 dargestellt. Für eine störungsfreie Funkverbindung zwischen Abfragegerät 12 und Antwortgerät 13 ist vorzugsweise eine der Antennen 19, 20 zirkular und die andere linear polarisiert, wobei dann vorteilhaft die Abfrageantenne 20 die zirkulare und die Antwortantenne 19 die lineare Polarisierung aufweist, weil für diese Zuordnung sich eine preiswerter herstellbare Antwortantenne 19 und damit eine Verbilligung des an den Träger 10 zu montierenden Antwortgerätes 13 ergibt. Die Abfrageantenne 20 läßt sich auch stärker bündeln als eine Antenne 19 am Antwortgerät 13; wobei eine möglichst schmale Antennencharakteristik vorteilhaft ist, damit beim aufeinanderfolgenden Ansprechen von Trägern 17-17i mit Antwortgeräten 13-13i die Aktivierung mehrerer nebeneinander angeordneter Antwortgeräte 13-13i möglichst vermieden ist. Bei den Trägern 17 kann es sich dabei um Artikel handeln, die nebeneinander aufgereiht sind und von einem diesbezüglich instationären Abfragegerät 12 nacheinander erfaßt werden, oder aber die Artikel fahren auf einer Fahrbahn oder auf einem Förderband am stationären Abfragegerät 12 vorbei.

Da die Amplitude des vom Abfragegerät 12 empfangenen Antwortsignales 15 jeweils bei der halben Wellenlänge zu Null wird, um ihr Vorzeichen umzukehren, treten periodisch Abstände 21 zwischen Abfrage- und Antwortantennen 20-19 auf, in denen die Amplitude des Abfrage- bzw. Antwortsignales 14, 15 so gering wird, daß sie nicht moduliert bzw. nicht demoduliert werden kann. Das kann für den praktischen Einsatz einer solchen Kommunikationseinrichtung 11 hinderlich sein, da insbesondere dann der Abstand 21 nicht vorherbestimmbar und schwankend ist, wenn Träger 17 von Antwortgeräten 13 ein fest installiertes Abfragegerät 12 nicht-spurgebunden passieren, wie etwa im Falle von Passanten oder Fahrzeugen an einer Zugangs- oder Gebührenkontrollstelle. Um solche Funktionsausfälle zu vermeiden, arbeitet der Empfänger 22 im Abfragegerät 12 mit zwei funktional additiv einander überlagerten Mischern 23, von denen der eine eine Amplitude liefert, deren zeitlicher Verlauf dem Kosinus, beim anderen dagegen dem Sinus des doppelten Abstandes 21 dividiert durch die Wellenlänge des Antwortsignales 15 folgt. Die Sinusabhängigkeit desjenigen Mischers 23, der nicht direkt aus dem Sendegenerator 24 gespeist ist, wird dabei mittels eines 90°-Kopplers 25 gewonnen, so daß sich diesbezüglich ein entsprechend phasenverschobenes Sendesignal und insgesamt mit den beiden Mischern 23 der Betrieb eines Quadraturmischers ergibt. Da hiermit nun die eine Amplitude maximal wird, während die andere gerade ihre Nullstelle einnimmt, liefert der Empfänger 22 mit der Amplitudenüberlagerung stets ein Ausgangssignal 26, dessen Amplitude nicht zu Null wird, an die Decodierschaltung 27. Diese ermittelt daraus den Inhalt der Identitätsinformation 16 und gegebenenfalls zusätzlich den Inhalt einer aktuellen Statusinformation 18 als Steuersignal 28 für z. B. eine nachgeschaltete Anzeige- und Registriereinrichtung oder Steuereinrichtung zum Entriegeln oder Öffnen einer Sperre.

Zum Modifizieren mit den Informationen 16, 18 erfährt das vom Antwortgerät 13 aufgenommene Abfragesignal 14 vor seiner Wieder-Aussendung als Antwortsignal 15 zweckmäßigerweise eine Pulsmodulation. Die kann in einer Einsenkung oder völligen Austastung der Amplitude des Abfragesignales 14 durch eine gesteuerte Bedämpfung oder Unterbrechung des Speisekreises für die Antwortantenne 19 bestehen, wie in den beiden eingangs genannten eigenen älteren Anmeldungen beschrieben. Störunempfindlicher ist allerdings eine Frequenzmodulation oder wenigstens eine gemischte Amplituden- und Phasen-Modulation. Diese läßt sich besonders einfach dadurch erzielen, daß anstelle einer als möglichst idealer Unterbrecher arbeitenden Diode im Modulator 29 ein Varaktor 30 eingesetzt, also eine spannungssteuerbare Kapazität, wie sie z. B. als spezielle Halbleiterdiode handelsüblich ist.

## Patentansprüche

1. Hochfrequenz-Kommunikationseinrichtung (11) mit von einem Abfragegerät (12) aussendbarem Abfragesignal (14) und mit einem von einem Antwortgerät (13) rücksendbaren Antwortsignal (15), welches das im Antwortgerät (13) modulierte Abfragesignal (14) selbst ist,
dadurch gekennzeichnet,
daß die Abfrage- und Antwortgeräte (12; 13, 13i) mit Antennen (20; 19) unterschiedlicher Polarisation ausgestattet sind, von denen eine zirkular und eine linear polarisiert ist.

2. Kommunikationseinrichtung nach Anspruch 1,
dadurch gekennzeichnet,
daß die Abfrageantenne (20) zirkular und die Antwortantenne (19) linear polarisiert ist.

3. Kommunikationseinrichtung nach Anspruch 1 oder 2,
dadurch gekennzeichnet,
daß die Abfrageantenne (20) eine wesentlich stärker gebündelte Antennenrichtcharakteristik aufweist als die Antwortantenne (19).

4. Kommunikationseinrichtung, insbesondere nach einem der vorangehenden Ansprüche,
dadurch gekennzeichnet,
daß im Empfänger (22) des Abfragegerätes (12) eine phasenverschobene Überlagerung von Sende-Empfangs-Mischfrequenzen vorgesehen ist.

5. Kommunikationseinrichtung nach Anspruch 4,
dadurch gekennzeichnet,
daß zusätzlich zum Sende-Empfangs-Mischer (23) ein Quadraturmischer zum Liefern eines 90°-phasenverschobenen Mischersignales vorgesehen ist.

6. Kommunikationseinrichtung nach einem der vorangehenden Ansprüche,
dadurch gekennzeichnet,
daß die Beeinflussung des als Antwortsignal (15) wieder abzustrahlenden Abfragesignales (14) im Antwortgerät (13) eine Phasenmodulationskomponente enthält.

7. Kommunikationseinrichtung nach Anspruch 6,
dadurch gekennzeichnet,
daß im Antennenkreis der Antwortantenne (19) ein Varaktor (30) vorgesehen ist.
